# FASCICULE DE BREVET EUROPEEN

(11) **EP 2 331 433 B1**
(45) Date de publication et mention de la délivrance du brevet: **30.05.2012**
(21) Numéro de dépôt: 09752425.0
(22) Date de dépôt: 29.09.2009
(51) Int. Cl.: B65G 47/08, B65G 47/84

(54) **INSTALLATION DE PREPARATION DE LOTS DE PRODUITS, BOUTEILLES OU AUTRES.**
ANLAGE ZUR HERSTELLUNG VON CHARGEN VON PRODUKTEN, FLASCHEN UND DERGLEICHEN
PLANT FOR PREPARING BATCHES OF PRODUCTS, BOTTLES OR THE LIKE

(30) Priorité: 03.10.2008 FR 0856713
(43) Date de publication de la demande: 15.06.2011
(73) Titulaire: Sidel Participations, 76930 Octeville sur Mer (FR)
(72) Inventeur: VASSE, Michael, F-76930 Octeville-sur-Mer (FR); DANIERE, Lionel, F-76930 Octeville-sur-Mer (FR); LANGLOIS, Yannick, F-76930 Octeville-sur-Mer (FR)
(74) Mandataire: Cabinet Plasseraud
(86) Numéro de dépôt international: PCT/FR2009/051840
(87) Numéro de publication internationale: WO 2010/037959

(56) Documents cités:
- EP-A- 0 485 937
- US-A- 2 951 574
- US-A- 5 667 055

## Description

La présente invention concerne un perfectionnement aux installations de préparation de lots de produits du genre bouteilles ou autres, en vue, par exemple, de leur mise en caisses ou en vue de leur emballage au moyen d'un enrobage avec un film plastique en matériau thermo rétractable.

L'alimentation des machines d'emballage, fardeleuses ou autres, s'effectue à partir d'un flux de produits qui est travaillé pour préparer des lots dans lesquels lesdits produits sont répartis selon un schéma donné.

Le document WO 98/45186, par exemple, montre une installation qui permet de préparer des lots de bouteilles à partir d'un flux de produits qui est divisé en plusieurs lignes et les produits sont ensuite organisés par groupes, au moyen d'un système de doigts qui s'insèrent entre les produits de chaque ligne. Ce genre d'installation convient pour des productions en masse ; elle n'est pas prévue pour s'adapter de façon commode à des schémas de lots qui peuvent varier selon la destination et, surtout, selon la dimension des produits.

Le document US 5 667 055 montre une installation selon le préambule de la revencation 1. Ce document decrit une installation de préparation de lots de bouteilles ou autres qui comprend un convoyeur d'alimentation, un convoyeur de dégroupage constitué de plusieurs tapis sans fin associés à un système de butées de retenue qui sont portées par des traverses, lesquelles traverses sont espacées d'une distance qui correspond au diamètre des bouteilles pour former une rangée de bouteilles entre deux traverses consécutives, lesquelles butées ont une vitesse d'avancement qui est inférieure à celle des tapis de dégroupage pour créer automatiquement un écart entre deux rangées de bouteilles au moment de l'escamotage desdites butées de retenue, lesquelles rangées sont chacune prise en charge, après l'escamotage desdites butées, par une barrette d'un dispositif de convoyage orbital qui amène chaque rangée de bouteilles sur un convoyeur aval d'accumulation.

Dans ce document, le convoyeur aval d'accumulation avance à une vitesse qui permet de regrouper des rangées de bouteilles en coopération avec le dispositif de convoyage orbital qui est constitué de deux convoyeurs à barrettes imbriqués et de longueurs différentes, lesquels convoyeurs à barrettes agissent ensemble pour prendre en charge chaque rangée de bouteilles sur le convoyeur de dégroupage et pour les transférer sur le convoyeur aval d'accumulation, et, ensuite, le convoyeur à barrettes de plus grande longueur, effectue le regroupement de trois rangées sur ledit convoyeur aval, selon le mode de réalisation représenté sur les figures.

Le dégroupage s'effectue simultanément à l'escamotage des doigts grâce à la différence de vitesse entre la vitesse du convoyeur de dégroupage et la vitesse des butées. La précision du dégroupage dépend donc essentiellement de la précision du lâcher des bouteilles par les butées ; or au moment du lâcher de bouteilles, le contact entre les butées et les bouteilles peut générer des décalages dans un même rang de bouteilles.

Ce type d'installation, très spécialisée, ne présente aucun caractère de flexibilité, c'est-à-dire qu'elle ne peut pas traiter des lots de bouteilles de différents diamètres. En effet, un changement de diamètre des bouteilles impose un changement de pas entre la multitude de butées.

L'installation selon l'invention permet de traiter des produits de dimensions et de formes variées mais toujours à section circulaire ou ovale ; elle permet de surmonter les contraintes liées aux variations dimensionnelles des produits à regrouper en vue de la formation de lots dont les dimensions peuvent, elles aussi, varier selon le schéma de répartition des produits.

Cette installation est également conçue pour faciliter les interventions de toutes sortes, maintenance et/ou réparation, dans un minimum de temps, afin d'éviter de perturber la production des lots de produits.

L'installation selon l'invention, pour la préparation de lots de produits, comprend, disposés sur un même bâti et selon une même direction rectiligne longitudinale :
- un convoyeur amont qui amène, en continu, lesdits produits à ordonner, lesquels produits sont disposés en colonnes, ou files, sur ce convoyeur amont et ils sont guidés dans des couloirs longitudinaux,
- un convoyeur aval qui contribue à façonner lesdits lots selon un schéma précis, à partir d'un ou de plusieurs rangs de produits,
- un dispositif de régulation du flux de produits, dont le châssis est disposé entre les deux convoyeurs précités, c'est-à-dire le convoyeur amont et le convoyeur aval, lequel dispositif de régulation canalise les produits dans des couloirs délimités par des parois latérales et une sole, et il comporte des moyens pour réguler le flux des produits amenés par ledit convoyeur amont en les alignant sous la forme de rangs rectilignes transversalement, lesquels moyens de régulation du flux de produits sont constitués d'un système de butées escamotables qui sont mobiles longitudinalement de façon continue, lesquelles butées sont en forme de doigts qui s'insèrent de façon temporaire entre les produits d'une même colonne.

L'installation comprend également des moyens de réglage de la vitesse des différents convoyeurs et des butées de régulation, et cette installation est caractérisée en ce que ladite sole du dispositif de régulation est constituée :
- d'une part, de convoyeurs intermédiaires motorisés interposés entre ledit convoyeur amont et ledit convoyeur aval, lesquels convoyeurs intermédiaires, du type à tapis sans fin, sont encadrés par les doigts des butées de régulation qui circulent entre les parois desdits couloirs et les rebords latéraux desdits convoyeurs intermédiaires,
- d'autre part, de plans fixes disposés à l'entrée et à la sortie dudit dispositif de régulation, pour faire la jonction entre ledit convoyeur amont et lesdits convoyeurs intermédiaires et entre ces derniers et ledit convoyeur aval.

Toujours selon l'invention, l'installation comporte des moyens de réglage de la largeur des couloirs du dispositif de régulation pour adapter la largeur de ces couloirs aux dimensions des produits et elle comporte également des moyens pour régler, dans le sens longitudinal, l'espace entre les rangées consécutives de butées qui accompagnent lesdits produits.

Selon une autre disposition de l'invention, l'installation comporte, au niveau du dispositif de régulation du flux des produits, des moyens de centrage automatique de chaque convoyeur intermédiaire entre les parois du couloir auquel il est associé, lesquels moyens sont logés dans une structure qui fait office de support, avec un support disposé à chaque extrémité dudit convoyeur intermédiaire, et ces supports sont guidés transversalement sur des glissières appropriées qui sont solidaires du châssis dudit dispositif de régulation.

Toujours selon l'invention, les moyens de centrage automatique des supports de chaque convoyeur intermédiaire entre les parois de son propre couloir, sont constitués d'une paire de poussoirs à mouvements synchronisés, lesquels poussoirs, en forme de coins, sont guidés perpendiculairement aux parois correspondantes des couloirs, dans des mâchoire mobiles, lesquelles mâchoires sont sollicitées de façon élastique pour tendre à écarter, de façon permanente et synchrone, lesdits poussoirs vers lesdites parois.

Selon une autre disposition de l'invention, les mâchoires des moyens de centrage automatique sont logées dans chaque support, chaque support se présentant sous la forme d'un U à plat, et lesdites mâchoires sont guidées par la branche centrale, sur le fond dudit U, et par un axe tendu verticalement entre les deux branches parallèles dudit U, laquelle branche centrale est elle-même aménagée pour coulisser sur des glissières transversales portées par le châssis du dispositif de régulation.

Toujours selon l'invention, les convoyeurs intermédiaires sont associés à leur support au moyen d'un simple pion de centrage et de positionnement qui se situe en saillie sur la branche supérieure du support en U, lesquels convoyeurs intermédiaires comportent une poulie motrice qui coopère avec un organe commun d'entraînement et, en particulier, un arbre transversal à section polygonale sur lequel les poulies des différents convoyeurs peuvent coulisser lors du réglage de la largeur des couloirs.

Selon une autre disposition de l'invention, les parois des couloirs du dispositif de régulation, à l'exception de la paroi centrale qui est fixe et solidaire du châssis dudit dispositif de régulation, sont mobiles et fonctionnent par couples de parois disposées symétriquement par rapport à ladite paroi centrale, et chaque couple de parois est manoeuvré par des systèmes vis-écrous dont l'un est disposé à l'entrée et l'autre à la sortie dudit dispositif de régulation, avec des écrous qui sont solidaires desdites parois mobiles, à leurs extrémités, et des vis qui sont disposées transversalement sous le niveau du plan de convoyage des produits, de façon à apporter une grande rigidité et surtout une précision maximale pour le positionnement desdites parois et, par voie de conséquence, une grande précision aux butées de régulation qui accompagnent lesdits produits.

Toujours selon l'invention, les systèmes vis-écrous de positionnement et de réglage de chaque couple de parois, sont manoeuvrés simultanément au moyen, par exemple, d'un système de commande constitué de roues crantées qui sont solidaires des vis d'un même couple de parois, et de courroies crantées tendues entre lesdites roues dentées.

Selon une autre disposition de l'invention, l'installation comprend des butées de régulation du flux de produits qui sont réparties sur des traverses, lesquelles traverses, au nombre de quatre, sont réparties en deux jeux de couples indépendants, entremêlés, et chaque couple de traverses est constitué de deux traverses qui sont opposées, de façon diamétrale, et ces traverses sont fixées à leurs extrémités sur des moyens d'entraînement en forme de chaînes sans fin qui sont tendues entre deux couples de jeux de roues dentées motorisées et les moteurs de ces roues dentées sont actionnés par l'intermédiaire de moyens du type programme de commande numérique, lequel programme est aménagé pour établir, d'une part, un réglage de la vitesse d'avancement desdites butées afin de synchroniser leur mouvement avec celui du flux des produits lors de leur introduction entre deux produits consécutifs puis, ensuite, lors de leur retrait, et, pour établir, d'autre part, entre lesdits couples de traverses, un déphasage qui permet, en fonction des dimensions des produits, d'adapter l'écartement entre deux traverses consécutives de butées et de faire correspondre cet écartement à un multiple du diamètre des produits.

Toujours selon l'invention, les traverses qui portent les butées de régulation du flux de produits sont guidées au moyen d'un système de came pour permettre le positionnement vertical de ces butées, parallèlement à l'axe desdits produits, d'une part, lors de l'insertion desdites butées entre deux produits consécutifs, à l'entrée du dispositif de régulation, et, d'autre part, lors du retrait de ces mêmes butées, en sortie de ce dispositif de régulation.

Pour pouvoir être exécutée, l'invention est exposée de façon suffisamment claire et complète dans la description suivante qui, en plus, est accompagnée de dessins dans lesquels :
- la figure 1 est une élévation schématique de l'installation selon l'invention,
- la figure 2 montre, en perspective, le dispositif de régulation, en forme en de module, ou cassette, qui permet d'organiser des rangs de produits du type bouteilles,
- la figure 3 montre le bâti de l'installation, lequel bâti est aménagé en forme de berceau pour placer la cassette entre le convoyeur amont et le convoyeur aval,
- la figure 4 est une élévation, sous forme de schéma fonctionnel, montrant les principaux éléments de l'installation, et en particulier le dispositif de régulation du flux de bouteilles,
- la figure 5 montre un convoyeur intermédiaire sur lequel sont disposées des bouteilles, lesquelles bouteilles sont guidées dans une portion de couloir et elles sont retenues, au niveau de leurs flancs, par les doigts des butées qui permettent de réguler la vitesse du flux de bouteilles,
- la figure 6 montre, à une échelle plus importante, un mode de réalisation d'une butée de régulation,
- la figure 7 correspond à une version dépouillée de la figure 4 montrant, notamment, l'agencement d'une paroi du couloir du dispositif de régulation,
- les figures 8 à 10 représentent le système vis-écrous qui permet de positionner et de régler les différents couples de parois qui sont disposées symétriquement de part et d'autre de la paroi centrale qui, elle, est fixe ;
- la figure 11 montre, en perspective, une traverse porteuse de butées de régulation,
- la figure 12 correspond à une version dépouillée de la figure 4 montrant, notamment, le dessin de la came de guidage des différentes traverses porteuses des butées de régulation,
- la figure 13 montre, schématiquement, une vue de côté d'une traverse porteuse des butées de régulation,
- la figure 14 montre l'agencement du dispositif de régulation et montre également une paroi centrale ainsi que les arbres du système de guidage et de commande des traverses porteuses des butées de régulation,
- la figure 15 montre l'agencement du système d'entraînement des butées de régulation avec les traverses porteuses desdites butées et l'installation de ces traverses sur des chaînes sans fin disposées latéralement à chaque extrémité de chaque couple de traverses,
- la figure 16 montre un convoyeur intermédiaire, posé sur ses supports d'extrémités,
- la figure 17 montre le dispositif de régulation, en forme de module, ou cassette, équipé simplement d'un seul convoyeur intermédiaire,
- la figure 18 représente l'un des supports de convoyeur intermédiaire, lequel support permet de centrer automatiquement ce convoyeur entre deux parois formant un couloir et ce support est représenté, sur cette figure, dans une position qui correspond à la largeur minimale des couloirs,
- la figure 19 représente le support de la figure 18, mais dans une configuration qui permet de centrer un convoyeur intermédiaire dans un couloir dont la largeur est au maximum de sa valeur.

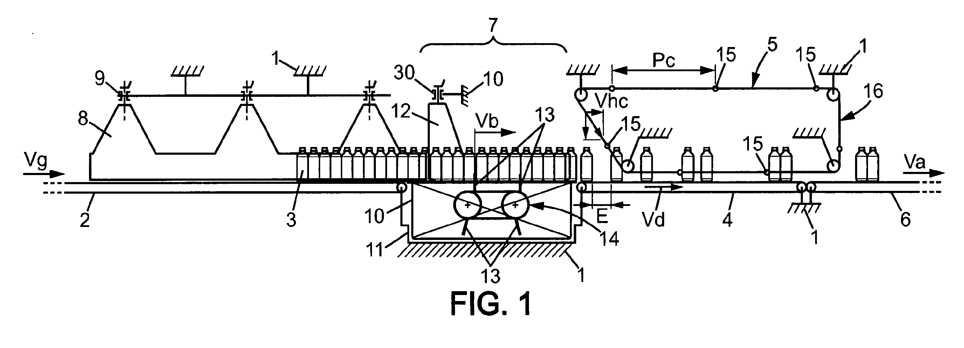

L'installation, telle que représentée figure 1, permet de traiter un flux de produits entre deux machines, non représentées, comme, par exemple, une étiqueteuse et une fardeleuse.

Cette installation comprend un bâti 1 sur lequel sont rassemblés :
- un convoyeur 2 amont de gavage à tapis sans fin qui transporte de façon continue et à une vitesse Vg un flux de produits et, plus particulièrement, comme représentées figure 1, des bouteilles 3 ;
- un convoyeur 4 aval à tapis sans fin qui réalise un dégroupage des bouteilles 3 et ce convoyeur 4 avance à une vitesse Vd ;
- un dispositif de formation des lots de bouteilles 3, dénommé cycleur 5, qui sera détaillé plus loin, lequel cycleur 5 est disposé au-dessus dudit convoyeur 4 aval ;
- un convoyeur 6 final, à tapis sans fin, qui alimente, par exemple, une fardeleuse, non représentée, à une vitesse Va qui est en relation avec la vitesse Vg du convoyeur de gavage et,
- entre le convoyeur 2 amont et le convoyeur 4 aval, un dispositif 7 de convoyage et de régulation qui place les bouteilles 3 sous la forme de rangs ordonnés, c'est-à-dire des rangs parfaitement rectilignes selon une ligne transversale et perpendiculaire au sens longitudinal de déplacement desdites bouteilles 3 sur ladite installation.

Les bouteilles 3 sont amenées par le convoyeur 2 amont, et elles sont disposées en colonnes, ou files, guidées dans des couloirs longitudinaux formés avec des parois 8 verticales qui sont portées par des traverses 9.

Les bouteilles 3 sont poussées en continu et en permanence par le convoyeur 2 amont qui fait office de convoyeur de gavage. Ce convoyeur 2 amont pousse les bouteilles 3 sur le dispositif 7 de régulation pour les maintenir groupées, en contact les unes avec les autres, afin d'éviter la formation de vides entre les bouteilles consécutives d'une même colonne.

Le dispositif 7 de régulation comprend son propre châssis 10 et il se présente sous la forme d'un module, ou cassette, interchangeable, qui se loge dans une sorte de berceau 11 aménagé dans le bâti 1 entre le convoyeur 2 amont et le convoyeur 4 aval avec une continuité au niveau du plan de convoyage des bouteilles 3.

Sur le dispositif 7 de régulation, les bouteilles 3 sont également guidées dans des couloirs formés par des parois 12 qui s'étendent sur la longueur de ce dispositif 7 de régulation, lesquelles parois 12 sont dans le prolongement des parois 8 du convoyeur 2 amont.

Ce dispositif 7 de régulation fait office lui aussi de convoyeur, mais d'une façon particulière. En effet, il comporte des butées 13 installées sur un système 14 d'entraînement et ces butées 13 sont mobiles pour accompagner les bouteilles 3 dans leurs couloirs respectifs.

Le système 14 d'entraînement des butées 13 comprend des traverses qui portent ces dernières, lesquelles traverses sont elles-mêmes portées et entraînées par des chaînes sans fin tendues entre des roues dentées ; ce système 14 d'entraînement des butées 13 sera détaillé plus loin, dans la description.

Les butées 13 barrent le passage des bouteilles 3 dans les couloirs du dispositif 7 de régulation et ces bouteilles sont obligées d'avancer à la vitesse Vb desdites butées, laquelle vitesse Vb est légèrement inférieure à la vitesse Vg du convoyeur 2 amont qui est chargé de gaver l'installation en bouteilles et en particulier de gaver ce dispositif 7 de régulation qui contrôle la vitesse du flux de bouteilles. La vitesse Vg du convoyeur 2 de gavage est supérieure à celle des butées 13 d'une valeur de l'ordre de dix pour cent.

La réalisation de rangs de bouteilles serrés les uns contre les autres, grâce aux butées 13, permet, en sortie du dispositif 7 de régulation, de réaliser une séparation précise desdits rangs de bouteilles les uns par rapport aux autres au moyen du convoyeur 4 aval qui fait office de convoyeur de dégroupage.

La vitesse Vd de ce convoyeur 4 aval de dégroupage est supérieure à la vitesse Vb des butées 13 pour séparer les rangs de bouteilles à la sortie du dispositif 7 de régulation et établir, entre deux rangs consécutifs, un espace E, lequel espace est nécessaire pour procéder ensuite au regroupement desdits rangs en vue de la formation des lots de bouteilles au moyen du cycleur 5.

Ce cycleur 5 comprend des barrettes 15 qui sont portées par deux chaînes 16 sans fin sur lesquelles lesdites barrettes 15 sont régulièrement espacées. Ces barrettes 15 s'insèrent entre les rangs de bouteilles, à la sortie du dispositif 7 de régulation, et elles ont pour fonction de regrouper, selon le cas, plusieurs rangs de bouteilles pour former un lot conforme au schéma prévu.

Pour effectuer ce regroupement, chaque barrette 15 s'insère de haut en bas entre deux rangs consécutifs de bouteilles 3, en suivant un chemin incliné. Chaque barrette 15 s'insère dans l'espace E qui sépare les deux rangs de bouteilles 3, à une vitesse dont la composante horizontale Vhc est égale à la vitesse Vd d'avancement du convoyeur 4 aval de dégroupage et, ensuite, ladite barrette 15 avance à une vitesse Vc qui est supérieure à la vitesse Vd dudit convoyeur 4 aval pour effectuer, sur ce dernier, un éventuel réalignement du rang et, selon le cas, en plus, un regroupement des différents rangs qui se situent entre deux barrettes 15 consécutives du cycleur 5.

Ce regroupement s'effectue en poussant, avec la barrette 15 correspondante, le dernier rang de bouteilles de façon à rassembler ce dernier rang avec le ou les rangs précédents et former le lot prévu. La vitesse Vc d'avancement des barrettes 15 au-dessus du tapis du convoyeur 4 aval étant supérieure à la vitesse Vd de ce dernier, le rang pris en charge par la barrette 15 remonte sur ledit tapis et rattrape le ou les rangs précédents qui avancent, eux, à la vitesse Vd dudit convoyeur 4.

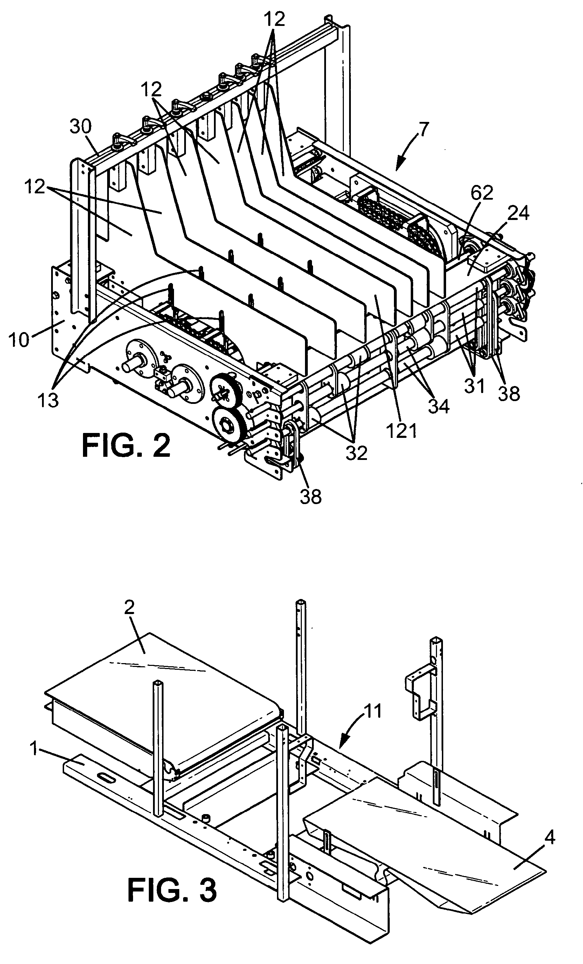

La figure 2 montre le dispositif 7 de régulation avec, rassemblées sur le châssis 10, les différentes parois 12 qui constituent des couloirs de passage pour les bouteilles 3.

Sur cette figure, les parois 12 sont représentées avec deux types d'écartement : - d'un côté de la paroi centrale 121, les parois sont représentées dans une configuration de petite largeur de couloirs et, - de l'autre côté, elles sont représentées dans une configuration de grande largeur de couloirs. Dans la réalité, les parois 12 sont disposées symétriquement par rapport à la paroi centrale 121 ; elles fonctionnent par couples pour s'écarter ou se resserrer ensemble.

Toujours sur cette figure 2, on remarque également la présence des moyens de réglage de la position des parois 12 pour adapter la largeur des couloirs à la dimension des bouteilles 3 ; lesquels moyens de réglage seront détaillés plus loin.

On remarque aussi, sur cette figure 2, les butées 13, en forme de doigts, qui accompagnent les bouteilles 3 lors de leur passage dans le dispositif 7 de régulation.

Ces butées 13 du dispositif 7 de régulation ont pour fonction, comme signalé auparavant, d'imposer une vitesse d'avancement au flux de bouteilles 3 et de positionner ces bouteilles en rang en les alignant transversalement de façon parfaitement rectiligne. Ces butées 13 accompagnent les bouteilles 3 qui sont poussées en permanence par le convoyeur 2 amont ; les bouteilles glissent sur ce convoyeur 2 du fait de la différence de vitesse entre lesdites butées 13 et ledit convoyeur 2 qui gave le dispositif 7 de régulation.

Les rangs serrés de bouteilles 3, qui sont formés grâce aux butées 13, sont maintenus jusqu'à l'entrée du convoyeur 4 aval qui fait office de convoyeur de dégroupage, c'est-à-dire que ce convoyeur 4 aval a pour fonction de séparer un par un les rangs de bouteilles qui sont ordonnés par lesdites butées 13.

Tout ceci sera également détaillé plus loin dans la description.

La figure 3 montre le bâti 1 qui est aménagé pour accueillir le dispositif 7 de régulation. Ce bâti 1 comporte le berceau 11, entre le convoyeur 2 amont et le convoyeur 4 aval, pour accueillir le dispositif 7 de régulation et le positionner afin d'assurer une continuité au niveau du plan de convoyage des bouteilles sur la longueur de l'installation.

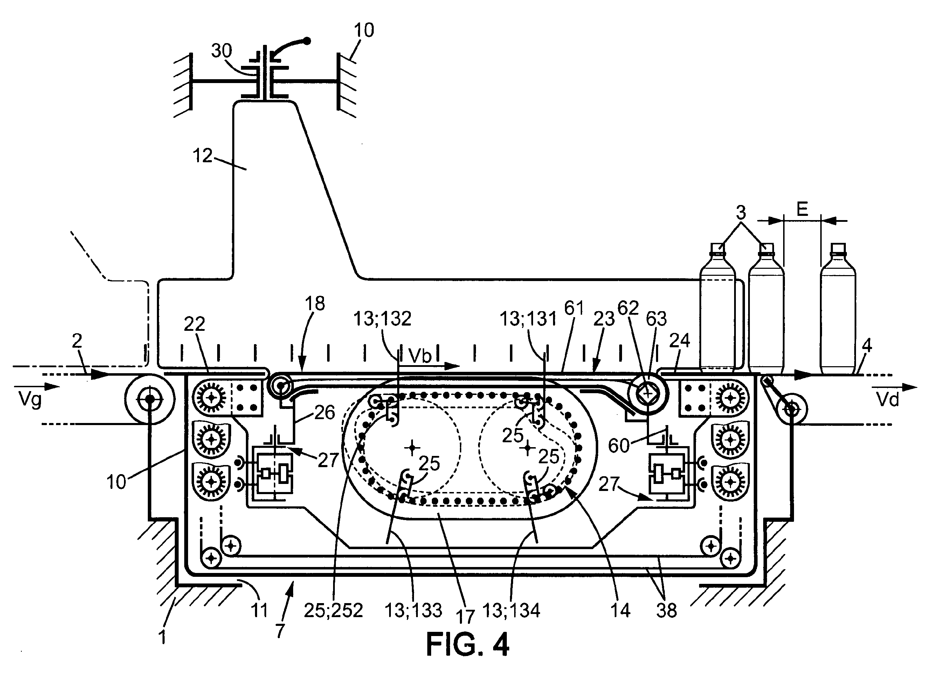

On retrouve figure 4, sous la forme d'un schéma, la partie de cette installation qui se situe entre le convoyeur 2 amont et le convoyeur 4 aval, c'est-à-dire le dispositif 7 de régulation du flux de bouteilles 3.

Ce dispositif 7 de régulation comprend donc le châssis 10 qui est positionné dans le berceau 11 du bâti 1. Ce châssis 10 se présente sous la forme d'un module, ou cassette, qui constitue une sorte d'équipement pour l'installation, et en particulier un équipement interchangeable.

Ce dispositif 7 de régulation comprend les parois 12 qui forment les différents couloirs de guidage des bouteilles 3 et on remarque un orifice 17 de forme oblongue aménagé au coeur de chaque paroi 12 ; cet orifice 17 se situe sous le niveau de la sole 18 qui constitue le plan de convoyage desdites bouteilles 3. Cet orifice 17 encadre le système 14 d'entraînement des butées 13 dont il sera question plus loin.

La sole 18 du dispositif 7 de régulation est constituée de plusieurs éléments aboutés : deux plans 22 et 24 fixes portés directement par le châssis 10 et plusieurs convoyeurs 23 intermédiaires du type à tapis sans fin. Un premier plan 22 fixe est situé à l'entrée du dispositif 7 de régulation, il fait la jonction entre le convoyeur 2 amont et les convoyeurs 23 intermédiaires qui s'intercalent entre les parois 12. Le second plan 24 fixe fait la jonction entre les convoyeurs 23 intermédiaires et le convoyeur 4 aval.

Les bouteilles 3 suivent un chemin rectiligne horizontal depuis le convoyeur 2 amont jusqu'au convoyeur 4 aval, en passant successivement sur le plan 22 fixe situé à l'entrée du dispositif 7 de régulation, puis sur les différents convoyeurs 23 intermédiaires et, enfin, sur le plan 24 fixe avant d'atteindre le convoyeur 4 aval.

Les bouteilles 3 sont canalisées sur le dispositif 7 de régulation, entre les parois 12 qui forment des couloirs, lesquelles parois 12 se situent dans le prolongement des parois 8 qui sont disposées au-dessus du convoyeur 2 amont.

Les bouteilles 3 se déplacent en colonnes, ou files, à une vitesse Vg sur le convoyeur 2 amont, laquelle vitesse est choisie pour effectuer une sorte de gavage du dispositif 7 de régulation.

Sur ce dispositif 7 de régulation, les bouteilles 3 ont une vitesse Vb qui est réglée par les butées 13, lesquelles butées, comme détaillées plus loin, sont disposées sur des traverses 25 rectilignes qui sont mobiles longitudinalement pour accompagner, tout en les retenant, les bouteilles 3 des différentes colonnes, ou files, formant ainsi des rangs de bouteilles parfaitement rectilignes, transversalement, et compacts, du fait de la poussée provenant des bouteilles 3 situées en amont sur le convoyeur 2 amont.

En fait, ces butées 13 retiennent les bouteilles qui sont amenées et poussées par le convoyeur 2 amont de gavage. Ces butées 13 forment l'équivalent d'une barrière à la fois réelle et virtuelle ; cette barrière est réelle car elle arrête les bouteilles 3 qui sont amenées par le convoyeur 2 amont de gavage, mais elle est également virtuelle car le rang de bouteilles qui est en aval de cette barrière, est en contact direct avec lesdites bouteilles qui sont arrêtées par ladite barrière ; et ces bouteilles qui sont en aval sont toujours poussées par les bouteilles qui sont retenues et qui sont calées sur lesdites butées 13 ; ces bouteilles aval ne sont pas poussées par les butées 13, lesdites butées ne font qu'accompagner le mouvement des bouteilles aval.

Grâce à la gestion de la vitesse du convoyeur 2 de gavage et à la gestion de la vitesse de la barrière constituée par les butées 13, le mouvement d'avance des rangs de bouteilles 3 est parfaitement contrôlé de sorte que les rangs sont parfaitement ordonnés et offrent un maximum de sécurité pour le bon déroulement de l'opération ultérieure de dégroupage qui va consister à séparer , les uns après les autres, les rangs qui se présentent au convoyeur 4 aval dont le tapis circule à une vitesse Vd supérieure à la vitesse Vb desdites butées 13.

Le convoyeur 2 amont a notamment pour fonction, comme indiqué précédemment de gaver le dispositif 7 de régulation, pour éviter la formation de vides dans les colonnes de bouteilles 3 et pour maintenir une certaine compacité au niveau de chaque colonne de bouteilles 3.

On remarque, toujours figure 4, les quatre jeux de butées 13 de régulation ; deux jeux consécutifs de ces quatre jeux de butées sont en position active, insérés entre des bouteilles 3 consécutives.

Au fur et à mesure de l'avancement des bouteilles 3, il y a toujours au moins un jeu de butées 13 en position active de retenue des bouteilles 3 dans leurs couloirs et, au maximum, il ne peut y avoir que deux jeux de butées 13 consécutives en position active.

Lorsqu'un jeu de butées 13 s'introduit entre deux bouteilles 3 consécutives, à l'avant du dispositif 7 de régulation, un seul jeu de butées 13 est en position active car le jeu de butées 13 précédent s'est déjà escamoté sous le niveau du plan de circulation desdites bouteilles.

Des moyens détaillés plus loin et, en particulier, une came associée au mécanisme de motorisation des butées 13, permettent l'introduction et la rétraction desdites butées en les plaçant et en les maintenant dans une position qui est perpendiculaire au plan de déplacement des bouteilles 3, parallèle à l'axe desdites bouteilles.

Chaque convoyeur 23 intermédiaire comprend une structure 26 qui repose, à chacune de ses extrémités, sur un support 27 détaillé plus loin, lequel support 27 est lui-même porté par des glissières qui permettent, comme détaillées plus loin également, de déplacer transversalement chaque convoyeur 23 intermédiaire en fonction de la position des parois 12 qui forment les couloirs et ceci lors de chaque réglage de la largeur desdits couloirs, lorsqu'il y a un changement de format au niveau des bouteilles.

La vitesse Vi des convoyeurs 23 intermédiaires est du même ordre que la vitesse Vb des butées 13, mais légèrement inférieure, pour conserver un contact entre lesdites butées 13 et les bouteilles 3, lequel contact dépend, de ce fait, de la pression exercée par les bouteilles qui sont portées par le convoyeur 2 de gavage et qui se situent en amont desdites butées 13.

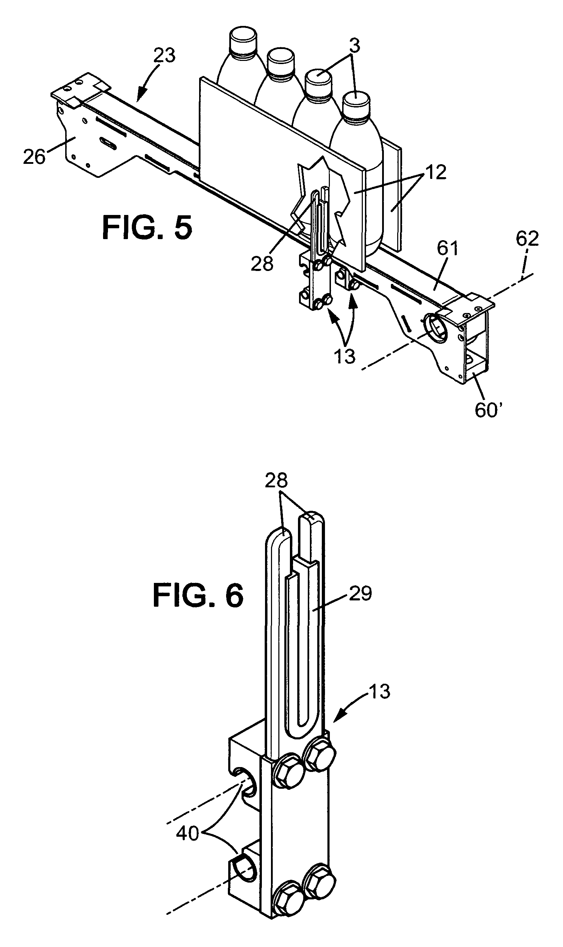

La figure 5 montre quelques bouteilles 3 disposées en ligne sur un convoyeur 23 intermédiaire, lesquelles bouteilles sont guidées par les parois 12 qui forment un couloir dans lequel est centré ledit convoyeur 23. Dans ce couloir, les bouteilles 3 sont en appui sur les doigts des butées 13 qui accompagnent le mouvement desdites bouteilles à une vitesse Vb qui est sensiblement inférieure à la vitesse Vg du convoyeur 2 amont.

On remarque, figure 6, que les butées 13 se présentent sous la forme d'un diapason avec deux doigts 28 ; ces doigts 28, d'une même butée 13, encadrent la paroi 12 avec laquelle ils sont associés, comme montré figure 5 et les doigts 28 situés dans un même couloir encadrent le convoyeur 23 qui constitue la sole 18 de ce couloir.

De préférence, chaque butée 13 comporte un patin 29, en matériau approprié du genre antifriction, lequel patin, en forme de U, s'interpose entre les doigts 28 et la paroi 12 en question pour éviter un frottement excessif entre les deux.

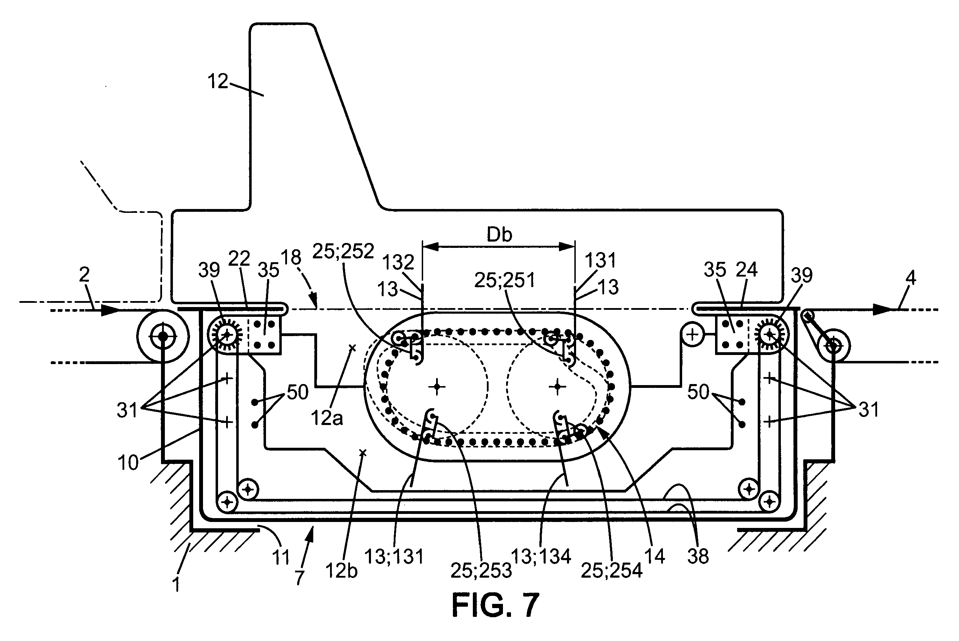

Les parois 12 s'étendent au-dessus de la sole 18 qui forme le plan de convoyage des bouteilles 3 sur le dispositif 7 de régulation, et elles s'étendent, comme cela est visible clairement figure 7, en dessous de cette sole 18. Ces parois 12 sont positionnées et réglées pour établir la largeur des couloirs au moyen de plusieurs systèmes du type vis-écrous qui sont disposés à l'entrée et à la sortie du dispositif 7 de régulation.

A leur partie supérieure, ces parois 12 sont fixées sur une poutre 30 qui est solidaire du châssis 10. Cette poutre 30, visible figures 1, 2 et 4, notamment, est disposée transversalement et elle est aménagée avec des moyens, du genre glissière, qui permettent le déplacement des parois 12, transversalement, lors du réglage de la largeur des différents couloirs dans lesquels circulent les bouteilles 3.

De la même façon, les parois 8, comme montrées figure 1, sont fixées sur les poutres 9 qui sont solidaires du bâti 1 et ces poutres 9 sont également aménagées pour permettre le réglage de la position transversale desdites parois 8.

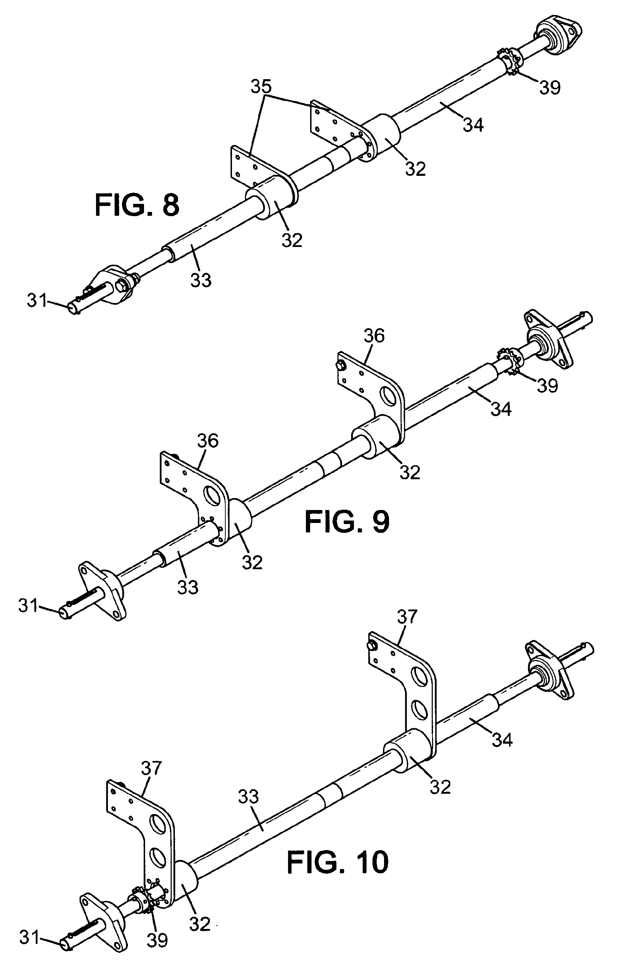

Les figures 8 à 10 montrent les différents systèmes vis-écrou qui permettent de régler la position des couples de parois 12, et en particulier des trois couples de parois 12 qui se situent de part et d'autre de la paroi centrale 121, laquelle paroi 121 centrale est fixe, solidaire du châssis 10, comme mentionné précédemment en relation avec la figure 2.

Ces différents couples de parois 12 sont guidés et commandés, à chacune de leurs extrémités, au moyen d'arbres 31 qui s'étendent sous le niveau de la sole 18 et ces arbres 31 sont montés dans des paliers solidaires des flancs du châssis 10.

Chaque paroi 12 mobile est en fait solidaire d'un écrou 32 qui est monté sur l'arbre 31 correspondant ; elle est solidaire dudit écrou 32 par l'intermédiaire d'une patte, détaillée ci-après, dont la forme est adaptée à la position dudit arbre 31 correspondant et cette patte, comportant ledit écrou, a aussi pour fonction de réunir les deux parties constitutives de chaque paroi 12.

En effet, ces parois 12 comportent, sous le niveau de la sole 18, un orifice 17 de forme oblongue pour permettre le passage du système 14 d'entraînement des butées 13 et, pour des questions de commodité de montage de ce système d'entraînement, elles sont réalisées en deux parties : une portion supérieure 12a et une portion inférieure 12b, lesquelles portion 12a et 12b sont assemblées par des pattes qui font partie des moyens de réglage de l'écartement desdites parois 12.

La figure 8 montre le système vis-écrous du couple de parois 12 qui forment les deux couloirs centraux en coopération avec la paroi 121 centrale qui est fixe. Ce système vis-écrous est situé au plus près de la sole 18 de guidage des bouteilles 3, sous cette dernière.

Deux vis 33 et 34, à pas inversés, sont usinées sur un même arbre 31, de part et d'autre de la partie centrale dudit arbre. Ces parties filetées de l'arbre 31 se situent de chaque côté de la paroi 121 centrale, et deux écrous 32 coopèrent respectivement avec ces deux vis 33 et 34 pour entraîner les pattes 35 sur lesquelles sont fixées les parois 12 correspondantes, lesquelles pattes 35 servant aussi à relier les deux portions 12a et 12b qui forment ces parois 12.

Les figures 9 et 10 montrent les systèmes vis-écrous qui se situent sous le système vis-écrous décrit précédemment. Ces deux systèmes vis-écrous comportent, comme précédemment, des vis 33 et 34 à pas inversés qui s'étendent de par et d'autre de la partie médiane de l'arbre 31 et des écrous 32 qui sont solidaires des pattes 36 et 37 en forme d'équerre, lesquelles pattes 36 et 37 sont solidaires, respectivement, des deux autres couples de parois 12, comme montrés également figure 2. La branche horizontale des équerres 36, 37 sert d'organe d'assemblage des deux parties 12a et 12 b des parois 12 et la partie verticale de ces équerres 36, 37 est solidaires des écrous 32 qui assurent le déplacement desdites parois 12 en coopération avec les vis 33 et 34. Les différentes branches horizontales des équerres 36, 37 se situent au même niveau que les pattes 35, c'est-à-dire juste sous le niveau de la sole 18, et les branches verticales ont une longueur qui est adaptée à la position des vis 33 et 34 ; ces branches verticales s'étendent sous le niveau de la sole 18.

Le réglage de la largeur des couloirs s'effectue par déplacement de chaque couple de parois 12, de façon symétrique, de part et d'autre de la paroi 121 centrale. Ce déplacement des différents couples de parois 12 s'effectue couple par couple de façon manuelle ou au moyen d'une motorisation adaptée en agissant sur les arbres 31 qui portent les vis 33, 34.

Comme représentés figure 2 et figure 7, les systèmes vis-écrou d'un même couple de parois 12 sont reliés par une transmission du type courroie 38, laquelle courroie 38 est tendue entre des roues crantées 39 qui sont disposées en bout des arbres 31 correspondants qui se situent à l'entrée et à la sortie du dispositif 7 de régulation.

On obtient, avec ce type de montage, une grande rigidité des parois 12 au niveau de la sole 18, c'est-à-dire au niveau du plan de circulation des bouteilles 3 et, par voie de conséquence, une position plus précise des doigts 28 par rapport aux bouteilles elles-mêmes.

En effet, les doigts 28 sont chacun en contact avec une génératrice des bouteilles 3, et la précision de ce contact doigts-bouteille se doit d'être la plus précise possible pour obtenir des rangs de bouteilles parfaitement ordonnés ; chaque bouteille 3 d'un même rang doit être placée dans un plan qui est perpendiculaire à l'axe longitudinal d'avancement desdits rangs.

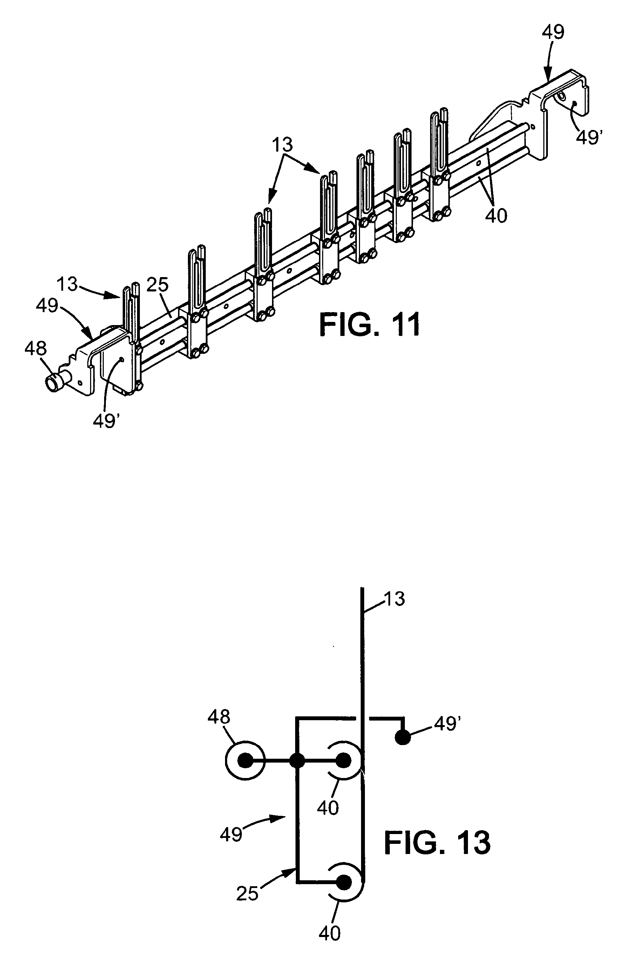

Sur la figure 11, on remarque également que les butées 13 sont mobiles transversalement ; elles sont montées sur des glissières 40 qui sont installées sur chaque traverse 25 pour suivre les parois 12 et s'adapter automatiquement à la position desdites parois lors du réglage de leur écartement.

Les traverses 25 sont portées, à leurs extrémités, par des chaînes sans fin qui s'enroulent sur un couple de roues dentées : un premier jeu de couple de roues dentées porte deux traverses et un deuxième jeu de couple de roues dentées porte les deux autres traverses.

Figure 7, on remarque la position des quatre traverses 25 : les traverses 251 et 253 sont solidaires des chaînes sans fin d'un même jeu de couple de roues dentées et les traverses 252 et 254 sont, de la même façon, solidaires de chaînes sans fin d'un autre jeu de couple de roues dentées.

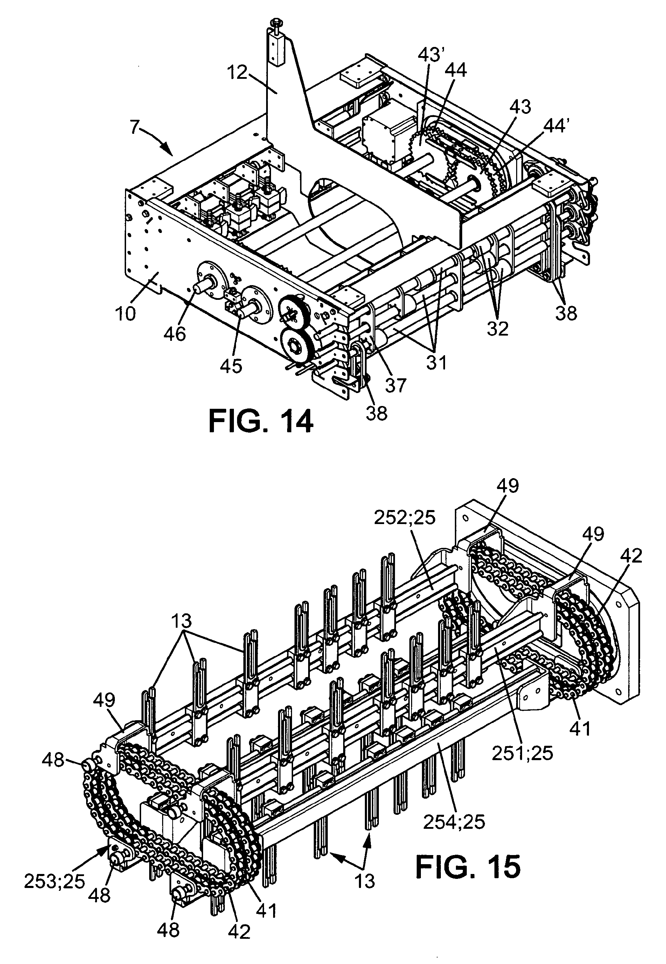

Ces couples de roues dentées apparaissent notamment figure 7 en pointillés et figure 14, et les chaînes sans fin apparaissent en plus sur la figure 15.

Chaque couple de traverses 25 est porté, au niveau de ses extrémités, par deux chaînes sans fin : le couple de traverses 251, 253 est porté par le couple de chaînes 41 et le couple de traverses 252, 254 est porté par le couple de chaînes 42.

Chaque chaîne 41 s'enroule sur deux roues dentées 43, 43', et, de même, chaque chaîne 42 s'enroule sur deux roues dentées 44, 44'.

Les traverses 251 à 254 portent les butées 13 et ces butées 13 ont été repérées sur la figure 7, respectivement, avec les repères 131 à 134.

Les traverses 251 et 253 forment un couple et elles sont opposées, l'une par rapport à l'autre, de façon diamétrale, par rapport au point médian qui se situe à mi-distance des axes des roues 43, 44 dentées. De même, les traverses 252 et 254 sont opposées, de façon diamétrale, par rapport à ce point médian qui se situe à mi-distance des axes des roues 43, 44.

Les roues dentées 43 de chaque chaîne 41, sont entraînées par un même arbre 45 moteur et les roues dentées 44 de chaque chaîne 42, sont entraînées par un même arbre 46 moteur. Les deux arbres moteurs 45 et 46 ont un entraxe qui est sensiblement supérieur au diamètre des roues dentées et ils servent également de simple palier pour les autres roues dentées 44' et 43' respectivement.

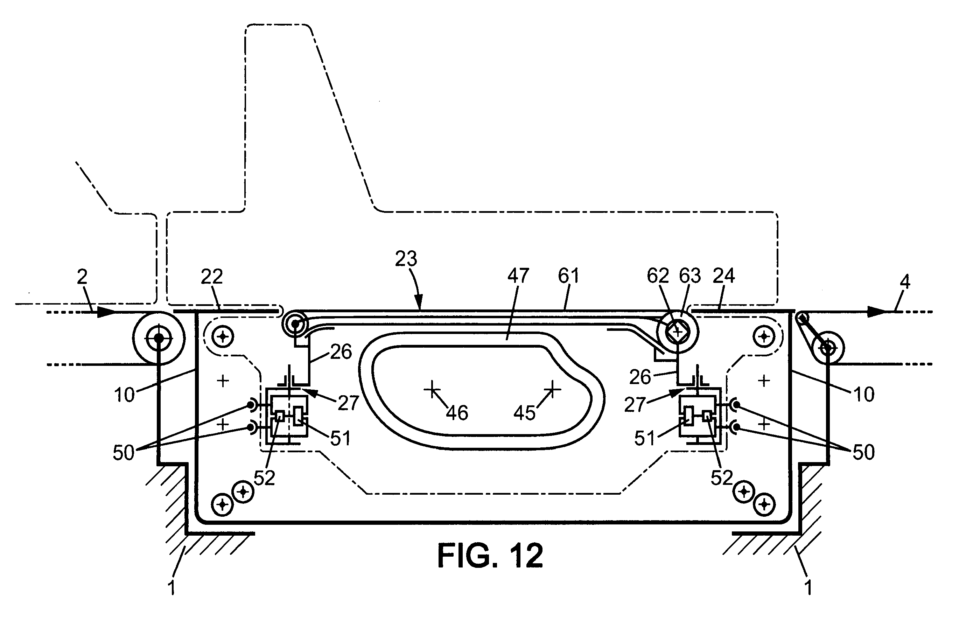

Pour pouvoir s'insérer facilement entre deux bouteilles 3 consécutives, les butées 13 sont orientées au moyen d'un système de cames et de galets suiveurs. Deux cames 47 identiques sont installées sur les parois latérales du châssis 11 et l'une d'elles est visible sur la figure 12 notamment. Ces cames 47 coopèrent avec des galets 48 suiveurs que l'on aperçoit figures 11 et 15, positionnés à chaque extrémité des traverses 25. Ces galets 48 sont solidaires des traverses par l'intermédiaire de pièces 49 en forme de U dont une branche est fixée à l'extrémité de la traverse 25 correspondante, et l'autre branche porte le galet 48. Ces pièces 49 permettent de fixer les couples de traverses 25 sur chaque couple de chaînes sans fin et elles permettent aussi un chevauchement du couple de chaînes sans fin et, en particulier, les chaînes sans fin porteuses de l'autre couple de traverses.

La figure 13 représente, schématiquement, une traverse 25 avec ses glissières 40 pour porter les butées 13. Cette traverse 25 porte également, à chacune de ses extrémités, un galet 48 qui est monté sur la pièce en forme de U pour coopérer avec la came 47. Cette pièce en U comporte également les moyens qui permettent de fixer chaque traverse 25 sur les chaînes 41 et 42 sans fin correspondantes. Les moyens de fixation des traverses 25 sur les chaînes 41 et 42 sont constitués d'un axe 49' qui permet, pour chaque traverse 25, de conserver une liberté partielle de basculement pour suivre le mouvement du galet 48 auquel ladite traverse 25 est associée, lequel mouvement étant imposé par le chemin de la came 47.

Les variations dimensionnelles des bouteilles 3 obligent également à faire varier la distance Db entre deux butées 13 consécutives qui pénètrent les colonnes de ces bouteilles 3, dans un couloir du dispositif 7 de régulation.

La distance Db entre deux butées 13 consécutives est égale à n fois le diamètre des bouteilles où n est au moins égal à deux ; en fait, Dd a une valeur qui est de l'ordre de 240 mm. Cette valeur de Dd, combinée avec la possibilité de faire varier légèrement cette distance Dd, permet de gérer un flux de bouteilles (3) couramment utilisées dont les diamètres peuvent aller de 55 à 120 mm. En effet, il est possible de loger, entre deux butées 13 consécutives :
- cinq bouteilles de diamètre 55 mm, soit Dd = 275 mm,
- quatre bouteilles de diamètre 66 mm, soit Dd = 264 mm,
- trois bouteilles de diamètre 88 mm, soit Dd = 264 mm,
- et deux bouteilles de diamètre 120 mm, soit Dd = 240 mm.

Cette variation de la distance Db à gérer est donc de l'ordre de 35 mm, par exemple. La gestion de l'écart entre les butées 13 successives est rendue possible par un pilotage approprié de chacun des moteurs d'entraînement des deux jeux de couples de roues dentées.

Les moteurs des roues 43 et 44 dentées, attachés à chaque couple de traverses 25 de butées 13, sont pilotés par un automate, du genre commande numérique, pour réaliser un déphasage de ces deux couples de traverses 25 et pour adapter en permanence la distance Db entre deux butées 13 consécutives au diamètre des bouteilles.

Cette commande numérique permet aussi de faire varier la vitesse de ces butées 13 pour permettre leur introduction entre deux bouteilles d'une même colonne au moment opportun et, également, pour permettre leur retrait au moment opportun sans perturber la colonne de bouteilles qui avance, laquelle colonne est poussée par le flux de bouteilles 3 amenées par le convoyeur 2 amont de gavage tout en étant constamment retenue par l'un au moins des jeux de butées 13.

Cet aménagement du dispositif 7 de régulation, combiné avec le convoyeur 4 aval de dégroupage, permet aussi de former une grande variété de lots de bouteilles comprenant un ou plusieurs rangs. Le dispositif 7 de régulation présente les rangs de bouteilles 3 au convoyeur 4 aval et ce convoyeur 4 aval effectue le dégroupage desdits rangs, un par un, de façon systématique.

En effet, le dispositif 7 de régulation du flux de bouteilles permet, au moyen d'un réglage de la vitesse d'avancement des butées 13 et de la vitesse du convoyeur 4 aval, d'introduire, entre deux barrettes 15 consécutives du cycleur 5, un nombre plus ou moins grand de rangées de bouteilles 3.

L'espace E entre deux rangées de bouteilles 3 résulte du dégroupage et de la différence des vitesses qui existe entre les butées 13 et le convoyeur 4 aval ; cet espace E est variable et il est choisi selon le nombre de rangs de bouteilles qui sont nécessaires pour constituer un lot. Cet espace E doit, de toute façon, être suffisant pour permettre l'introduction de la barrette 15 concernée.

L'installation permet donc la formation de lots de bouteilles constitués d'un nombre variable de rangées de bouteilles, ledit nombre de rangées étant établi par le pas Pc qui existe entre deux tasseaux 15 du cycleur 5.

La vitesse Vg du convoyeur 2 amont de gavage est bien sûr adaptée à la vitesse Vb des butées 13. De même, la vitesse Vi des convoyeurs 23 intermédiaires est ajustée en fonction de la vitesse Vb des butées 13, de préférence, comme signalé précédemment, cette vitesse Vi est légèrement inférieure à celle desdites butées.

Le dispositif 7 de régulation présente un caractère polyvalent qui lui permet de s'adapter aussi bien aux dimensions des bouteilles 3 qu'à l'organisation des lots de bouteilles.

Le positionnement des parois 12 du dispositif 7 de régulation a une influence sur la position des butées 13, comme précisé auparavant, mais il a également une influence sur la position des convoyeurs 23 intermédiaires qui doivent rester centrés au niveau de leur propre couloir.

Chaque convoyeur 23 intermédiaire comporte, comme signalé précédemment en liaison avec la figure 4, une structure 26 qui fait office de bâti, laquelle structure est aménagée pour guider le tapis sans fin dudit convoyeur et elle est portée, à chacune de ses extrémités, par des supports 27, lesquels supports 27 sont mobiles transversalement au moyen de glissières 50 qui s'étendent transversalement dans le châssis 10, comme représenté figure 12 et qui sont solidaires de ce châssis 10.

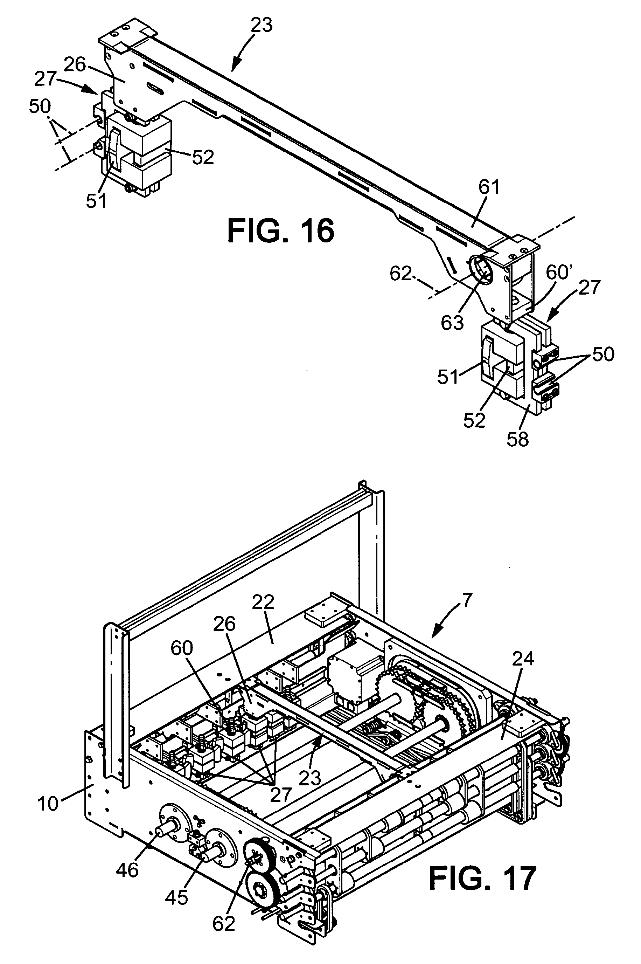

La figure 16 montre un convoyeur intermédiaire 23 qui est posé, à chacune de ses extrémités, sur les supports 27 ; ce convoyeur 23 forme une sorte de module, facilement démontable et interchangeable en cas de besoin.

Pour réaliser le centrage de ces convoyeurs 23 et de leurs supports 27, entre le jeu de parois 12, lesdits supports 27 sont aménagés pour accueillir un dispositif de centrage automatique qui est détaillé figures 16 à 19.

Ce dispositif de centrage automatique s'apparente à un compas ; il comprend deux poussoirs 51 et 52 en forme de coins, disposés transversalement, dont les mouvements sont synchronisés, et ces poussoirs 51 et 52 sont mis en mouvement par les parois 12 avec lesquelles ils sont en contact permanent.

Ces poussoirs 51 et 52 sont guidés dans une paire de mâchoires 53 et 54 qui sont elles-mêmes mobiles verticalement, guidées sur un axe 55 qui s'étend dans le support 27. Les mâchoires 53 et 54 sont sollicitées en permanence par des organes élastiques du genre ressorts 56 et 57 qui tendent, par réaction, à appliquer en permanence les poussoirs 51 et 52 sur les parois 12. Ces mâchoires 53 et 54 comportent des rainures disposées en vis-à-vis pour accueillir les poussoirs 51 et 52 en forme de coins ; lesquelles rainures sont aménagées perpendiculairement aux parois 12, et elles comportent des surfaces aménagées en biais pour coopérer avec celles desdits poussoirs 51 et 52.

Le support 27 est en forme de U, disposé à plat, et sa branche 58 centrale est verticale et elle est aménagée pour, d'un côté, servir de surface de guidage aux poussoirs 51 et 52, et, de l'autre côté, à l'extérieur, coopérer avec les glissières 50 qui sont solidaires de châssis 10.

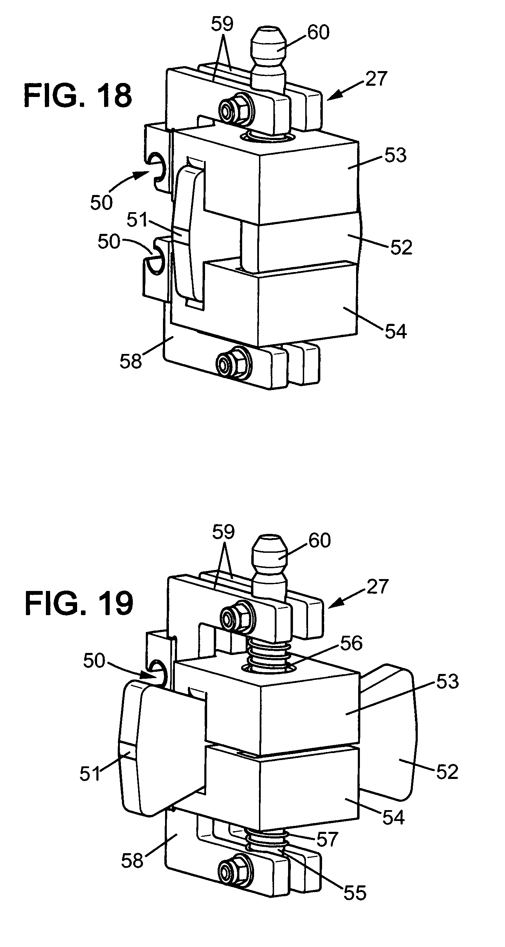

Au-dessus de la branche supérieure 59 du support 27, toujours figure 18, on remarque un pion 60 qui coopère avec une douille 60' disposée à l'extrémité inférieure de la structure 26 du convoyeur 23 intermédiaire, comme visible figures 5 et 16. Ce pion 60 est en saillie sur la branche 59 supérieure du support 27 en U ; il constitue un prolongement de la partie supérieure de l'axe 55 qui s'étend entre les deux branches dudit U : la branche supérieure 59 et la branche inférieure qui servent de guides aux poussoirs 51 et 52.

Chaque convoyeur 23 intermédiaire et, en particulier, son tapis 61 sans fin, est animé au moyen d'un arbre 62 qui s'étend transversalement. Cet arbre 62 a, de préférence, une section polygonale, carrée, par exemple, pour entraîner la roue 63 crantée sur laquelle est enroulé le tapis 61. L'arbre 62 permet à la roue 63 de coulisser transversalement et d'accompagner le support 27 et le convoyeur 23 qui suivent le mouvement des parois 12 lorsqu'elles sont déplacées pour régler la largeur du couloir correspondant.

Le dispositif 7 de régulation se présente aussi de préférence comme un module, ou cassette, c'est-à-dire qu'il est facilement démontable pour permettre l'installation d'une variante qui peut, par exemple, être adaptée pour des produits particuliers genre flacons. Ces flacons peuvent réclamer des moyens de retenue, c'est-à-dire des butées 13, ayant une forme particulière.

## Revendications

1. Installation de préparation de lots de produits comprenant, disposés sur un même bâti (1) et selon une même direction rectiligne longitudinale :
- un convoyeur (2) amont qui amène, en continu, lesdits produits à ordonner, lesquels produits (3) sont disposés en colonnes, ou files, sur ce convoyeur (2) et ils sont guidés dans des couloirs longitudinaux,
- un convoyeur (4) aval qui contribue à façonner lesdits lots selon un schéma précis, à partir d'un ou de plusieurs rangs de produits,
- un dispositif (7) de régulation du flux de produits, dont le châssis (10) est disposé entre les deux convoyeurs précités, lequel dispositif (7) de régulation canalise les produits dans des couloirs délimités par des parois (12) latérales et une sole (18) et il comporte des moyens pour réguler le flux des produits amenés par ledit convoyeur (2) amont en les alignant sous la forme de rangs rectilignes transversalement, lesquels moyens de régulation du flux de produits sont constitués d'un système de butées (13) escamotables qui sont mobiles longitudinalement de façon continue, lesquelles butées (13) sont en forme de doigts (28) qui s'insèrent de façon temporaire entre les produits d'une même colonne,
l'instalation comprend également des moyens de réglage de la vitesse des différents convoyeurs (2, 4) et des butées (13) de régulation,
l'instalation est **caractérisée en ce que** ladite sole (18) du dispositif (7) de régulation est constituée :
- d'une part, de convoyeurs (23) intermédiaires motorisés interposés entre le convoyeur (2) amont et le convoyeur (4) aval, lesquels convoyeurs (23) intermédiaires, du type à tapis (61) sans fin, sont encadrés par les doigts des butées (13) de régulation qui circulent entre les parois (12) desdits couloirs et les rebords latéraux desdits convoyeurs intermédiaires,
- d'autre part, de plans (22, 23) fixes disposés à l'entrée et à la sortie dudit dispositif (7) de régulation, pour faire la jonction entre ledit convoyeur (2) amont et lesdits convoyeurs (23) intermédiaires et entre ces derniers et ledit convoyeur (4) aval.

2. Installation de préparation de lots de produits selon la revendication 1, **caractérisée en ce qu'**elle comporte des moyens de réglage de la largeur des couloirs du dispositif (7) de régulation pour adapter la largeur de ces couloirs aux dimensions des produits (3) et elle comporte également des moyens pour régler, dans le sens longitudinal, l'espace entre les rangées consécutives de butées (13) qui accompagnent lesdits produits.

3. Installation de préparation de lots de produits selon l'une quelconque des revendications 1 ou 2, **caractérisée en ce qu'**elle comporte, au niveau du dispositif (7) de régulation du flux des produits (3), des moyens de centrage automatique de chaque convoyeur (23) intermédiaire entre les parois (12) du couloir auquel il est associé, lesquels moyens sont logés dans un support (27) disposé à chacune des extrémités dudit convoyeur (23) intermédiaire et ces supports (27) sont guidés transversalement sur des glissières (50) appropriées qui sont solidaires du châssis (10) dudit dispositif (7) de régulation.

4. Installation de préparation de lots de produits selon la revendication 3, **caractérisée en ce que** les moyens de centrage automatique des supports (27) de chaque convoyeur (23) intermédiaire, entre les parois (12) de son propre couloir, sont constitués d'une paire de poussoirs (51, 52) à mouvements synchronisés, lesquels poussoirs, en forme de coins, sont guidés perpendiculairement aux parois (12) correspondantes des couloirs, dans des mâchoires (53, 54) mobiles, lesquelles mâchoires (53, 54) sont sollicitées de façon élastique pour tendre à écarter, de façon permanente et synchrone, lesdits poussoirs (51, 52) vers lesdites parois (12).

5. Installation de préparation de lots de produits selon la revendication 4, **caractérisée en ce que** les mâchoires (53, 54) des moyens de centrage automatique sont logées dans chaque support (27), chaque support (27) se présentant sous la forme d'un U à plat, et lesdites mâchoires (53, 54) sont guidées par la branche (58) centrale, sur le fond dudit U, et par un axe (55) tendu verticalement entre les deux branches parallèles dudit U, laquelle branche (58) centrale est elle-même aménagée pour coulisser sur les glissières (50) transversales portées par le châssis (10) du dispositif (7) de régulation.

6. Installation de préparation de lots de produits selon la revendication 5, **caractérisée en ce que** les convoyeurs (23) intermédiaires sont associés à leur support (27) au moyen d'un simple pion (60) de centrage et de positionnement qui se situe en saillie sur la branche (59) supérieure du support (27) en U, lesquels convoyeurs (23) intermédiaires comportent une poulie (63) motrice qui coopère avec un organe commun d'entraînement et, en particulier, un arbre (62) transversal à section polygonale sur lequel lesdites poulies (63) des différents convoyeurs (23) peuvent coulisser lors du réglage de la largeur des couloirs.

7. Installation de préparation de lots de produits selon la revendication 2, **caractérisée en ce que** les parois (12) des couloirs du dispositif (7) de régulation, à l'exception de la paroi (121) centrale qui est fixe et solidaire du châssis (10) dudit dispositif (7) de régulation, sont mobiles et fonctionnent par couples de parois (12) disposées symétriquement par rapport à ladite paroi (121) centrale, chaque couple de parois (12) étant manoeuvré par des systèmes vis-écrous dont l'un est disposé à l'entrée et l'autre à la sortie dudit dispositif (7) de régulation, avec des écrous (32) qui sont solidaires desdites parois (12) mobiles, à leurs extrémités, et des vis (33, 34) qui sont disposées transversalement sous le niveau de la sole (18) constituant le plan (18) de convoyage des produits.

8. Installation de préparation de lots de produits selon la revendication 7, **caractérisée en ce que** les systèmes vis-écrous de positionnement et de réglage de chaque couple de parois (12), sont manoeuvres simultanément au moyen, par exemple, d'un système de commande constitué de roues (39) crantées qui sont solidaires des vis (33, 34) d'un même couple de parois (12), et de courroies (38) crantées tendues entre lesdites roues dentées.

9. Installation de préparation de lots de produits selon la revendication 2, **caractérisée en ce que** les butées (13) de régulation du flux de produits sont réparties sur des traverses (25), au nombre de quatre, lesquelles traverses (25) sont réparties en deux jeux de couples indépendants, entremêlés, et chaque couple est constitué de traverses qui sont opposées, de façon diamétrale, et elles sont fixées à leurs extrémités sur des moyens d'entraînement en forme de chaînes (41, 42) sans fin qui sont tendues entre deux couples de jeux de roues (43, 43' et 44, 44') dentées motorisées et les moteurs de ces roues dentées sont actionnés par l'intermédiaire de moyens du type programme de commande numérique, lequel programme est aménagé pour établir, d'une part, un réglage de la vitesse d'avancement desdites butées (13) afin de synchroniser leur mouvement avec celui du flux des produits (3) lors de leur introduction entre deux produits consécutifs et, ensuite, lors de leur retrait et, d'autre part, pour établir, entre lesdits couples de traverses (25), un déphasage qui permet, en fonction des dimensions des produits, d'adapter l'écartement entre deux traverses (25) consécutives de butées et de faire correspondre cet écartement à un multiple du diamètre des produits du genre bouteilles (3).

10. Installation de préparation de lots de produits selon la revendication 9, **caractérisée en ce que** les traverses (25) qui portent les butées (13) de régulation du flux de produits (3) sont guidées au moyen d'un système de came (47) pour permettre, d'une part, lors de l'insertion desdites butées (13) entre deux produits (3) consécutifs, à l'entrée du dispositif (7) de régulation, et, d'autre part, lors du retrait de ces mêmes butées (13), en sortie de ce dernier, le positionnement vertical de ces butées (13), parallèlement à l'axe desdits produits.

## Claims

1. An installation for preparing batches of products comprising, arranged on one and the same frame (1) and in one and the same longitudinal rectilinear direction:
- an upstream conveyor (2) which continuously brings said products to be ordered, which products (3) are arranged in columns, or lines, onto this conveyor (2) and they are guided in longitudinal passages,
- a downstream conveyor (4) which contributes to fashioning said batches according to a precise scheme, from one or more rows of products,
- a device (7) for regulating the flow of products, the chassis (10) of which is arranged between the abovementioned two conveyors, which regulation device (7) channels the products in passages delimited by lateral walls (12) and a bed (18) and it comprises means for regulating the flow of the products brought by said upstream conveyor (2) by aligning them in the form of transversally rectilinear rows, which means for regulating the flow of products consist of a system of retractable stops (13) which are longitudinally mobile in a continuous manner, which stops (13) are in the form of fingers (28) which are inserted temporarily between the products of one and the same column,
the installation also comprises means for adjusting the speed of the various conveyors (2, 4) and of the regulation stops (13),
the installation is **characterized in that** said bed (18) of the regulation device (7) consists:
- on the one hand, of motorized intermediate conveyors (23) interposed between the upstream conveyor (2) and the downstream conveyor (4), which intermediate conveyors (23), of the endless belt (61) type, are framed by the fingers of the regulation stops (13) which circulate between the walls (12) of said passages and the lateral flanges of said intermediate conveyors,
- on the other hand, fixed planes (22, 23) arranged at the input and at the output of said regulation device (7), to form the junction between said upstream conveyor (2) and said intermediate conveyors (23) and between the latter and said downstream conveyor (4).

2. Installation for preparing batches of products as claimed in claim 1, **characterized in that** it comprises means for adjusting the width of the passages of the regulation device (7) to adapt the width of these passages to the dimensions of the products (3) and it also comprises means for adjusting, in the longitudinal direction, the space between the consecutive rows of stops (13) which accompany said products.

3. The installation for preparing batches of products as claimed in any one of claims 1 or 2, **characterized in that** it includes, at the level of the device (7) for regulating the flow of products (3), means for automatically centering each intermediate conveyor (23) between the walls (12) of the passage with which it is associated, which means are housed in a support (27) arranged at each end of said intermediate conveyor (23) and these supports (27) are guided transversally on appropriate guideways (50) which are securely attached to the chassis (10) of said regulation device (7).

4. Installation for preparing batches of products as claimed in claim 3, **characterized in that** the means for automatically centering the supports (27) of each intermediate conveyor (23), between the walls (12) of its own passage, are formed by a pair of pushers (51, 52) with synchronized movements, which pushers, in the form of wedges, are guided perpendicularly to the corresponding walls (12) of the passages, in mobile jaws (53, 54), which jaws (53, 54) are stressed elastically in order to tend to separate, permanently and synchronously, said pushers (51, 52) towards said walls (12).

5. The installation for preparing batches of products as claimed in claim 4, **characterized in that** the jaws (53, 54) of the automatic centering means are housed in each support (27), each support (27) appearing in the form of a flat U, and said jaws (53, 54) are guided by the central branch (58), on the bottom of said U, and by an axis (55) stretched vertically between the two parallel branches of said U, which central branch (58) is in turn designed to slide on the transversal guideways (50) borne by the chassis (10) of the regulation device (7).

6. The installation for preparing batches of products as claimed in claim 5, **characterized in that** the intermediate conveyors (23) are associated with their support (27) by means of a simple centering and positioning pin (60) which is situated protruding on the upper branch (59) of the U-shaped support (27), which intermediate conveyors (23) include a drive pulley (63) which cooperates with a common driving component and, in particular, a transversal shaft (62) with polygonal cross section on which said pulleys (63) of the different conveyors (23) can slide when the width of the passages is being adjusted.

7. The installation for preparing batches of products as claimed in claim 2, **characterized in that** the walls (12) of the passages of the regulation device (7), apart from the central wall (121) which is fixed and securely attached to the chassis (10) of said regulation device (7), are mobile and operate by pairs of walls (12) arranged symmetrically relative to said central wall (121), each pair of walls (12) being operated by screw-nut systems, one of which is arranged at the input and the other at the output of said regulation device (7), with nuts (32) which are securely attached to said mobile walls (12), at their ends, and screws (33, 34) which are arranged transversally under the level of the bed (18) forming the product-conveying plane (18).

8. The installation for preparing batches of products as claimed in claim 7, **characterized in that** the screw-nut systems for positioning and adjusting each pair of walls (12) are maneuvered simultaneously by means, for example, of a control system consisting of toothed wheels (39) which are securely attached to the screws (33, 34) of one and the same pair of walls (12), and toothed belts (38) stretched between said toothed wheels.

9. The installation for preparing batches of products as claimed in claim 2, **characterized in that** the stops (13) for regulating the flow of products are distributed on cross-members (25), of which there are four, which cross-members (25) are divided up into two sets of independent and interlaced pairs, and each pair consists of cross-members which are diametrically opposite, and they are fixed at their ends to driving means in the form of endless chains (41, 42) which are stretched between two pairs of sets of motorized toothed wheels (43, 43' and 44, 44') and the motors of these toothed wheels are actuated via means of the digital control program type, which program is designed to establish, on the one hand, an adjustment of the speed of advance of said stops (13) in order to synchronize their movement with that of the flow of the products (3) when they are introduced between two consecutive products and, then, when they are retracted and, on the other hand, to establish, between said pairs of cross-members (25), a phase difference which makes it possible, according to the dimensions of the products, to adapt the separation between two consecutive cross-members (25) of stops and make this separation correspond to a multiple of the diameter of the products of the bottle type (3).

10. The installation for preparing batches of products as claimed in claim 9, **characterized in that** the cross-members (25) which support the stops (13) for regulating the flow of products (3) are guided by means of a cam system (47) to make it possible, on the one hand, when said stops (13) are inserted between two consecutive products (3), at the input of the regulation device (7) and, on the other hand, when the same stops (13) are retracted, at the output of the latter, to vertically position these stops (13), parallel to the axis of said products.

## Patentansprüche

1. Herstellungsvorrichtung für Chargen von Produkten, die auf einem gleichen Gestell und in der gleichen geraden Längsrichtung angeordnet sind, mit:
- einer stromaufwärtigen Transporteinrichtung (2), die kontinuierlich die anzuordnenden Produkte zuführt, wobei die Produkte (3) in Kolonnen oder Reihen auf der Transporteinrichtung (2) angeordnet sind und in Längsgängen geführt sind,
- einer stromabwärtige Transporteinrichtung (4), die dazu beiträgt, die Chargen nach einem genauen Schema anzuordnen, beginnend mit einer oder mehreren Reihen von Produkten,
- einer Reguliervorrichtung (7) für den Produktfluss, deren Rahmen (10) zwischen den zwei vorgenannten Transporteinrichtungen angeordnet ist, wobei die Reguliervorrichtung (7) die Produkte in den Gängen kanalisiert, die durch Seitenwände (12) und einen Boden (18) begrenzt sind, und die Mittel zum Regulieren des durch die stromaufwärtige Transporteinrichtung (2) zugeführten Produktflusses aufweist, unter seiner Ausrichtung in geraden transversalen Spalten, wobei die Mittel zum Regulieren des Produktflusses aus einem System von klappbaren Anschlägen (13) gebildet sind, die kontinuierlich in Längsrichtung beweglich sind, wobei die Anschläge (13) die Form von Fingern (28) aufweisen, die sich zeitweise zwischen den Produkten einer gleichen Spalte einfügen, wobei
die Vorrichtung ferner Mittel zum Regeln der Geschwindigkeit der unterschiedlichen Transporteinrichtungen (2, 4) und der Regulierungsanschläge (13) aufweist, und
die Vorrichtung **dadurch gekennzeichnet ist, dass** der Boden (18) der Einrichtung (7) gebildet ist:
- durch angetriebene Zwischentransporteinrichtungen (23) einerseits, die zwischen der stromaufwärtigen Transporteinrichtung (2) und der stromabwärtigen Transporteinrichtung (4) eingefügt sind, wobei die Zwischentransporteinrichtungen (23) des Typs Förderband (61) durch die Regulierungsanschlagfinger (13) umgeben sind, die zwischen den Wänden (12) der Gänge und den Seitenrändern der Zwischentransporteinrichtungen zirkulieren, und
- andererseits durch feststehende Ebenen (22, 23), die an dem Eingang und dem Ausgang der Reguliervorrichtung (7) angeordnet sind, um die Verbindung zwischen der stromaufwärtigen Transporteinrichtung (2) und den Zwischentransporteinrichtungen (23), und zwischen letzteren und der stromabwärtige Transporteinrichtung (4) herzustellen.

2. Herstellungsvorrichtung für Chargen von Produkten nach Anspruch 1, **dadurch gekennzeichnet, dass** sie Regelungsmittel für die Breite der Gänge der Regulierungsvorrichtung (7) aufweist, um die Breite der Gänge den Abmessungen der Produkte (3) anzupassen, und dass sie ferner ein Mittel zum Regeln des Zwischenraums zwischen den nacheinander aufgereihten Anschlägen (13) in Längsrichtung aufweist, die mit den Produkten mitlaufen.

3. Herstellungsvorrichtung für Chargen von Produkten nach einem der Ansprüche 1 oder 2, **dadurch gekennzeichnet, dass** sie auf der Höhe der Reguliervorrichtung (7) für den Produktfluss (3) Selbstzentriermittel für jede Zwischentransporteinrichtung (23) zwischen den Wänden (12) des Gangs, mit denen sie assoziiert ist, aufweist, wobei die Mittel in einer Unterstützung (27) aufgenommen sind, die an jedem der Enden der Zwischentransporteinrichtung (23) angeordnet ist, und die Unterstützungen (27) quer über geeignete Gleitschienen (50) geführt sind, die mit dem Gestell (10) der Reguliervorrichtung (7) verbunden sind.

4. Herstellungsvorrichtung für Chargen von Produkten nach Anspruch 3, **dadurch gekennzeichnet, dass** die Selbstzentrierungsmittel der Unterstützungen (27) einer jeden Zwischentransporteinrichtung (23) zwischen den Wänden (12) seines jeweiligen Gangs aus einem Paar Drücker (51, 52) für synchrone Bewegungen ausgebildet sind, wobei die keilförmigen Drücker senkrecht zu den Wänden (12) der jeweiligen Gänge in beweglichen Backen (53, 54) geführt sind, wobei die Backen (53, 54) elastisch belastet sind, um die Drücker (51, 52) unter Spannung, dauerhaft und synchron in Richtung der Wände (12) zu spreizen.

5. Herstellungsvorrichtung für Chargen von Produkten nach Anspruch 4, **dadurch gekennzeichnet, dass** die Backen (53, 54) der Selbstzentrierungsmittel jeweils in einer Unterstützung (27) aufgenommen sind, wobei die Unterstützung jeweils eine flache U-Form aufweist, und die Backen (53, 54) über den mittigen Schenkel (58) auf dem Boden des U geführt sind, und über eine sich zwischen den beiden parallelen Schenkeln vertikal erstreckende Achse (55), wobei der mittlere Schenkel (58) selbst gestaltet ist, um auf den querlaufenden Gleitschienen (50) verstellbar zu sein, die durch das Gestell (10) der Reguliervorrichtung (7) getragen werden.

6. Herstellungsvorrichtung für Chargen von Produkten nach Anspruch 5, **dadurch gekennzeichnet, dass** die Zwischentransporteinrichtungen (23) an ihrer Unterstützung (27) mit einem einfachen Zentrier- und Positionierstück (60) verknüpft sind, das sich aufliegend auf dem oberen Schenkel (59) der U-förmigen Unterstützung (27) befindet, wobei die Zwischentransporteinrichtungen (23) eine Treibrolle (63), die mit einer gemeinsamen Antriebseinrichtung zusammenwirkt, und insbesondere eine querlaufende Welle (62) mit vieleckigem Querschnitt aufweisen, auf der sich die Rollen (63) der verschiedenen Transporteinrichtungen (23) beim Regulieren der Breite der Gänge verschieben lassen.

7. Herstellungsvorrichtung für Chargen von Produkten nach Anspruch 2, **dadurch gekennzeichnet, dass** die Wände (12) der Gänge der Reguliervorrichtung (7) mit Ausnahme der mittleren Wand (121), die feststehend und mit dem Gestell (10) der Reguliervorrichtung (7) verbunden ist, beweglich sind und als Paare von Wänden (12) funktionieren, die in Bezug zu der mittleren Wand (121) symmetrisch angeordnet sind, wobei jedes Wandpaar (12) über Schrauben-Mutter-Systeme betätigt wird, von dem eines an dem Eingang und das andere an dem Ausgang der Reguliervorrichtung (7) angeordnet ist, mit Muttern (32), die mit den Enden der beweglichen Wänden (12) verbunden sind, und mit Schrauben (33, 34), die quer unter der Höhe des Bodens (18), der die Transportebene (18) der Produkte bildet, angeordnet sind.

8. Herstellungsvorrichtung für Chargen von Produkten nach Anspruch 7, **dadurch gekennzeichnet, dass** die SchraubenMutter-Systeme zur Positionierung und Regelung eines jeden Wandpaars (12) zum Beispiel mittels eines Steuersystems, das aus Zahnrädern (39) gebildet wird, die mit den Schrauben (33, 34) des gleichen Wandpaars (12) verbunden sind, und mittels zwischen den Zahnrädern gespannten Zahnriemen (38) gleichzeitig betätigt werden.

9. Herstellungsvorrichtung für Chargen von Produkten nach Anspruch 2, **dadurch gekennzeichnet, dass** die Regulierungsanschläge (13) zum Regulieren des Produktflusses auf vier Traversen (25) verteilt sind, wobei die Traversen (25) als zwei voneinander unabhängige zusammenwirkende gemischte Paare verteilt sind, und jedes Paar aus einander gegenüberliegenden Traversen gebildet wird, und die an ihren Enden an den kettenartigen (41, 42) Antriebsmitteln befestigt sind, die zwischen zwei zusammenwirkenden angetriebenen Zahnrädern (43, 43' und 44, 44') gespannt sind, und die Motoren der Zahnräder über ein numerisches Steuermittelprogramm betrieben werden, wobei das Programm eingerichtet ist, um einerseits eine Geschwindigkeitsregelung zur Fortbewegung der Anschläge (13) zur Synchronisierung ihrer Bewegung mit der des Produktflusses (3) bei ihrer Einführung zwischen zwei aufeinanderfolgende Produkte vorzusehen, und um andererseits danach bei ihrem Rückzug zwischen den Traversenpaaren (25) eine Phasenverschiebung vorzusehen, die in Abhängigkeit der Abmessungen der Produkte zulässt, den Abstand zwischen zwei aufeinanderfolgenden Anschlagtraversen (25) anzupassen, und den Abstand ein Vielfaches des Durchmessers der flaschenartigen Produkte (3) entsprechen zu lassen.

10. Herstellungsvorrichtung für Chargen von Produkten nach Anspruch 9, **dadurch gekennzeichnet, dass** die Traversen (25), die die Regulierungsanschläge (13) zur Regulierung des Produktflusses (3) tragen, mittels eines Mitnehmersystems (47) geführt sind, um einerseits zur Zeit der Einführung der Anschläge (13) zwischen zwei aufeinanderfolgenden Produkten (3) bei Eintritt der Reguliervorrichtung (7) und andererseits während des Zurückziehens der gleichen Anschläge (13) während des Austritts der letzteren, die vertikale Positionierung der Anschläge (13) parallel zu der Achse der Produkte zu ermöglichen.
